# EUROPÄISCHE PATENTSCHRIFT

(11) **EP 0 618 251 B1**
(45) Veröffentlichungstag und Bekanntmachung des Hinweises auf die Patenterteilung: **03.03.1999**
(21) Anmeldenummer: 94104294.7
(22) Anmeldetag: 18.03.1994
(51) Int. Cl.: C08G 65/28

(54) **Niedrigviskose, hochfunktionelle, helle Polyether und Saccharose-Basis**
Clear low viscosity high-functional polyethers based on saccharose
Polyéthers clairs multifonctionnels à basse viscosité basés sur le saccharose

(30) Priorität: 31.03.1993 DE 4310504
(43) Veröffentlichungstag der Anmeldung: 05.10.1994
(73) Patentinhaber: BAYER AG, 51368 Leverkusen (DE)
(72) Erfinder: Gupta, Pramod, Dr., D-50181 Bedburg (DE); Sandhagen, Hans-Joachim, Dr., D-41540 Dormagen (DE); Betz, Werner, Dr., D-51519 Odenthal (DE); Leyrer, Ulrich, Dr., D-51375 Leverkusen (DE); Hoppe, Martin, Dr., D-51373 Leverkusen (DE)

(56) Entgegenhaltungen:
- DE-A- 2 241 242
- GB-A- 1 467 954

## Beschreibung

Die Herstellung von Polyetherpolyolen auf Basis Saccharose, für den Einsatz auf dem Polyurethan-Hartschaumsektor ist seit langem bekannt. Dazu wird Saccharose mit Alkylenoxiden in Anwesenheit von Natriumhydroxyd zum Saccharosehydroxyalkylether umgesetzt (J.W. Le Maistre, R.B. Seymour, J. Org. Chem. 782, 1948). In den US-A 3 085 085 und US-A 3 153 002 wird die Umsetzung von Saccharose mit Ethylenoxid und Propylenoxid unter katalytischer Mitwirkung von Kaliumhydroxyd zum Saccharosehydroxyalkylether bei höheren Temperaturen beschreiben.

Die hier beschriebenen Verfahrensvarianten führen zu Zuckerethern, deren Funktionalität wegen Bildung von Glykolen durch die Umsetzung von Wasser mit Epoxiden, gegenüber reinen Saccharosepolyethern stark erniedrigt ist.

In US-A 2 902 478 wird ein Verfahren beschrieben, in dem Saccharose in Epoxiden suspendiert wird und zum Polyether reagiert. Dieses Verfahren hat den Vorteil, daß keine Erniedrigung der Funktionalität durch Glykolbildung stattfindet. Die Viskosität solcher Polyether liegt jedoch sehr hoch. Außerdem beinhalten solche Reaktionen größere Sicherheitsrisiken für die Anlagen.

In US-A 3 941 769 wird ein Verfahren beschrieben, in dem Saccharose in organischen Suspensionsmitteln, wie z.B. Benzol, Toluol, Ethylbenzol, Xylol oder Chlorbenzol (Siedebereich 80-180 C), mit Epoxiden umgesetzt wird. Diese Variante hat einige gravierende Nachteile. Einerseits wird durch die Verwendung von Suspensionsmitteln die Reaktionskapazität zwischen 10-40% erniedrigt, andererseits muß das Suspensionsmittel am Ende des Herstellungsprozesses entfernt werden. Die nach diesem Verfahren erhaltenen Produkte sind hochfunktionell, je nach Alkoxilierungsgrad hochviskos (104.00 - 400.000 mPa.s) und von stark bräunlicher Färbung. Die hohen Farbzahlen resultieren aus unerwünschten Nebenreaktionen sowie zum Teil durch die Karamellisierung der eingesetzten Saccharose.

In US-A 4 230 824 wird die Herstellung von hochfunktionellen Polyethern (> 6,5) auf Basis Saccharose und Polyalkylenpolyaminen durch Umsetzung mit Ethylenoxid und Propylenoxid beschrieben, wobei wie in US-A 3 941 765 Toluol als Suspensionsmittel verwendet wird. Das hierbei erhaltene Produkt weist eine Farbzahl von Gardener 12 auf.

In US-A 4 996 310 wird ein Verfahren zur Herstellung von hoch ethylenoxidhaltigen niedrigviskosen Polyethern auf Basis Saccharose beschrieben, wobei Polyether mit einer Funktionalität von 4,4 - 4,5 erhalten werden, die Viskositäten von 830 bis 2.500 mPa∗s bei 25°C und Farbzahlen von 10 - 40 Gardener aufweisen.

Aus diesen Beispielen wird deutlich, daß zur Zeit kein brauchbares Verfahren für die Herstellung hochfunktioneller, niedrigviskoser, heller Saccharosepolyether existiert. Die oben erwähnten Verfahren erfüllen diese Anforderungen nur zum Teil.

Es war daher die Aufgabe der vorliegenden Erfindung, ein Verfahren zur Herstellung von Saccharosepolyethern zur Verfügung zu stellen, welches unter weitestgehender Vermeidung der Nachteile der genannten Verfahren auf einfache Weise hochfunktionelle, niedrigvoskose, helle Saccharosepolyether, ohne zusätzliche Sicherheitsrisiken zugänglich macht.

Diese Aufgabe wurde erfindungsgemäß dadurch gelöst, daß Gemische aus Saccharose und einem niedermolekularen Polyol, in Gegenwart von sehr niedrigen Mengen Alkalihydroxidkatalysatoren einer Alkoxilierungsreaktion unterzogen wurden.

Gegenstand der vorliegenden Erfindung ist somit ein Verfahren zur Herstellung von Saccharosepolyethern durch Alkkoxilierung von Saccharose, gemäß Anspruch 1. Bei der Durchführung des erfindungsgemäßen Verfahrens wird bevorzugt folgendermaßen verfahren:

Saccharose wird in einem Polyol wie z.B. Ethylenglykol, Propylenglykol, Glyzerin, Trimethylolpropan, Hexantriol, Pentaerythrit oder Sorbit und/oder Alkoxylierungsprodukten dieser polyfunktionellen Alkohole, bei Temperaturen von 25-80°C suspendiert.

Unter Stickstoffatmosphäre wird in dieser Suspension zwischen 20- 110°C vorzugsweise zwischen 80 - 110°C eine geringe Menge Alkalihydroxyd zugesetzt. Wenn Saccharose in einem alkalischen Alkoxilierungsprodukt der polyfunktionellen Alkohole suspendiert wird, kann die Zugabemenge von Alkalihydroxid reduziert werden oder ganz entfallen.

Das so erhaltene gut rührbare breiige Gemisch wird dann auf 85-130°C vorzugsweise 95 - 110°C erwärmt und anschließend bei Drücken von 0,3 - 4 bar Stickstoff-Überdruck vorzugsweise 0,5 - 2,5 bar Überdruck mit Alkylenoxiden zur Reaktion gebracht.

Vorzugsweise wird das Alkylenoxid in Mengen von 0,5 bis 4 Mol pro OH-Gruppe des Polyols eingesetzt.

Nach beendeter Alkylierungsreaktion und einer angemessenen Nachreaktionszeit bei 100 - 130 C, bevorzugt bei 105 - 120 C wird das Polyadditionsprodukt mit verdünnter Mineralsäure neutralisiert. Dem neutralisierten Produkt wird eventuell ein Antioxidant wie z.B. 2,6-Di-tert-butyl-1-hydroxy-toluol (BHT) zugesetzt. Wasser und sonstige eventuell vorhandene Nebenprodukte werden im Vakuum entfernt. Die hierbei anfallenden Salze werden durch Filtration entfernt.

Bei den, beim erfndungsgemäßen Verfahren einzusetzenden Polyolen handelt es sich um wasserlösliche Verbindungen mit einem unter 100 C liegenden Schmelzpunkt und einem zwischen 62 und 420g/mol liegenden Molekulargewicht. Beispiele derartiger Verbindungen sind Ethylenglykol, Propylenglykol, Glyzerin, Pentaerythrit, Sorbit, Trimethylpropan sowie deren Alkoxilierungsprodukte mit Ethylenoxid und/oder Propylenoxid. Das Polyol soll vorzugsweise eine OH-Zahl von 800 bis 1 200 aufweisen, wobei das Molekulargewicht zwischen 76 und 420 liegen soll.

Neben den reinen Verbindungen können auch Gemische von zwei oder mehr der beschriebenen Zusatzstoffe zu Saccharose eingesetzt werden.

Die Umsetzung der Alkylenoxide wird in Gegenwart von Alkalihydroxiden als Katalysator, vorzugsweise Kaliumhydroxid durchgeführt. Die Menge an Kaliumhydroxid beträgt zwischen 500 und 3.000 ppm, bevorzugt bei 600 - 2.500 ppm des Gewichtes des fertigen Polyols.

Beim erfindungsgemäßen Verfahren werden als Alkylenoxide vorzugsweise Ethylenoxid, Propylenoxid und/oder 1,2-Butylenoxid eingesetzt. Hierbei wird das Startergemisch mit 2-90Gew.% Ethylenoxid und zwischen 98-100Gew.% Propylenoxid und/oder Butylenoxid (bezogen auf Summe Alkylenoxide) nacheinander oder als Gemisch in einem Reaktionsansatz umgesetzt.

Die Reaktionstemperaturen liegen zwischen 95 und 130 C vorzugsweise zwischen 100 - 120 C. Die Umsetzung der Alkylenoxide wird bei erhöhtem Stickstoffdruck zwischen 0,3-4,0 bar Überdruck, bevorzugt zwischen 0,5-2,5 bar Überdruck durchgeführt.

Für die Herstellung von hochfunktionellen, niedrigviskosen, hellen Polyethern nach erfindungsgemäßem Verfahren wird die Menge an Alkylenoxiden so gewählt, daß jedes Saccharosemolekül im Mittel mit 4 - 32 mol Alkylenoxid zur Reaktion gebracht wird. Die erhaltenen Polyether weisen eine OH-Zahl zwischen 200 und 600, vorzugsweise zwischen 250 und 500 auf. Die rechnerische Funktionalität liegt zwischen 5,3 und 7,5.

Die erfindungsgemäß hergestellten Polyether sind klare, sehr helle bis leicht gelbliche, niedrigviskose Produkte. Die Viskosität liegt je nach OH-Zahl und Gehalt an Zusatzstoffen zwischen 1.000 (OHZ unter 250) bis 19.000 (bei OHZ 470) mPa.s.

Wesentliche Vorteile des erfindungsgemäßen Verfahrens sind:

Durch die Verwendung von di-bis hexafunktionellen Zusatzstoffen zu Saccharose, sowie deren Alkoxilierungsprodukten, wird das Reaktionsgemisch so gut rührbar, daß auf die Verwendung von Suspensionsmitteln verzichtet werden kann.

Die gute Rührbarkeit gewährleistet, daß kein Festbacken an der Gefäßwand stattfindet. Eine Dunkelfärbung der Produkte wird vermieden. Die sehr niedrigen Wassergehalte des Startergemisches ermöglichen eine minimale Bildung von Glykolen, die funktionalitätserniedrigend wirken.

Durch die Addition von Ethylenoxid an das Startergemisch kann die Katalyse der Reaktion drastisch reduziert werden.

Für den nachfolgenden Umsatz mit Propylenoxid und/oder 1,2-Butylenoxid stehen überwiegend primäre Hydroxylgruppen zur Verfügung, so daß auch hierbei eine niedrige Katalysatorkonzentration gewählt werden kann.

Durch die niedrige Katalysatorenkonzentration wird der Umfang der Nebenreaktionen stark reduziert.

Die nach dem erfindungsgemäßen Verfahren hergestellten hochfunktionellen, niedrigviskosen, hellen Polyole (Farbzahl APHA 120 - 450) sind sehr wertvolle Rohstoffe zur Herstellung von Polyurethanschäumen nach bekannten Verfahren zur Herstellung von PU-Schaumstoffen, durch Umsetzung mit aromatischen Polyisocyanaten unter Verwendung von üblichen Hilfs- und Zusatzstoffen.

Die Ausführungsbeispiele wurden in einem Reaktionsbehälter durchgeführt, der mit Heiz- und Kühlvorrichtung, einem Rührwerk, einer Einrichtung zum Verdrängen der Luft durch ein Inertgas (z.B. Stickstoff) und einer Vorrichtung zur Dosierung von Alkylenoxiden versehen war.

### Beispiel 1

In einem Reaktionsbehälter wurden bei Raumtemperatur unter Rühren 471,6 g Glyzerin vorgelegt. Durch Heizen wurde das Glyzerin auf 95 C erwärmt. Bei dieser Temperatur wurden 1.493 g Saccharose unter Rühren eingetragen. Die Suspension läßt sich gut rühren. Danach wurden bei 95 C 33,3 g KOH (45,0%ig) zugegeben. Die Rührbarkeit der Suspension verbesserte sich. Die Suspension wurde auf 105 C erwärmt und bei einem Druck von 0,4 - 0,6 bar Stickstoffüberdruck und einer Temperatur von 103 - 107 C wurden 2.420 g Propylenoxid allmählich zudosiert. Danach wurden 1.210,5 g Ethylenoxid addiert. Anschließend wurden nochmals 403,5 g Propylenoxid zudosiert. Nach beendeter Propylenoxidzugabe wurde noch weitere 5 h bei 100 - 110 C gerührt.

Das alkalische Polymerisat wurde wie üblich aufgearbeitet. Das erhaltene leicht gelbe, niedrigviskose, Produkt hatte folgende physikalischen Eigenschaften:

| | |
|---|---|
| Hydroxylzahl (mg KOH/g) | 468 |
| Wassergehalt (%) | 0,015 |
| Viskosität 25 C(mPa.s) | 12276 |
| Mittlere Funktionalität | 5,3 (berechnet aus Einsatz und Hydroxylzahl) |
| Farbe | leicht gelb |

### Beispiel 2

In einem Reaktionsbehälter, wie in Beispiel 1 beschrieben, wurden 1.993,5 g eines Sorbit Polyethers, aus Sorbit und Propylenoxid, OH-Zahl 1.000, der 14,23 g KOH enthält, bei 25 C vorgelegt. Dazu wurden unter Rühren 226,1 g Saccharose eingetragen. Das Startergemisch wurde, auf 105 C erwärmt. Danach wurden, bei 100 - 110 C und 0,4 - 0,6 bar StickstoffüberdrucK 970 g Propylenoxid langsam zudosiert. Anschließend wurde 470,1 g Ethylenoxid bei 100 - 110 C und 0,4 - 0,6 bar Stickstoffdruck, zudosiert, zuletzt wurden bei obigen Reaktionsbedingungen 2.350,2 g Propylenoxid zudosiert. Nach beendeter Propylenoxidzugabe wurde noch weitere 5 h bei 100 - 110 C gerührt.

Das alkalische Polymerisat wurde wie üblich aufgearbeitet. Das erhaltene leicht gelbe, niedrigviskose Produkt hatte folgende physikalischen Eigenschaften:

| | |
|---|---|
| Hydroxylzahl (mg KOH/g) | 367 |
| Wassergehalt (%) | 0,02 |
| Viskosität 25°C (mPa.s) | 8.652 |
| Mittlere Funktionalität | 6,2 (berechnet aus Einsatz und Hydroxylzahl) |
| Farbe (APHA) | 150 |

### Beispiel 3

In einem Reaktionsbehälter, wie in Beispiel beschrieben, wurden 724,3 g eines Polyethers aus Sorbit und Ethylenoxid, OH-Zahl 1.000, der 5,2 g KOH enthielt, bei Raumtemperatur vorgelegt. Dazu wurden unter Rühren 731,7 g Saccharose und 27,7 g 45%ige KOH eingetragen. Das Startergemisch wurde auf 100 - 110°C erwärmt. Bei 103 - 110°C und 0,4 - 0,6 bar Stickstoffüberdruck wurden langsam 2.108 g Ethylenoxid zudosiert. Anschließend wurden unter obigen Reaktionsbedingungen 2.439,2 g Propylenoxid langsam zudosiert. Nach beendeter Propylenoxidzugabe wurde noch weitere 5 h bei 100 - 110°C weiter gerührt. Das alkalische Polymerisat wurde, wie üblich, aufgearbeitet. Das erhaltene Produkt hatte folgende physikalische Eigenschaften:

| | |
|---|---|
| Hydroxylzahl (mg KOH/g) | 280 |
| Wassergehalt (%) | 0,02 |
| Viskosität 25°C (mPa.s) | 2.075 |
| Mittlere Funktionalität | 7,0 (berechnet aus Einsatz und Hydroxylzahl) |
| Farbe (APHA) | 350 |

### Beispiel 4

In einem Reaktionsbehälter, wie in Beispiel 1 beschrieben, wurden 336 g eines Polyethers, wie in Beispiel 3 beschrieben, der 2,44 g KOH enthielt, bei Raumtemperatur vorgelegt. Dazu wurden unter Rühren 1025 g Saccharose bei Raumtemperatur eingetragen. Das Startergemisch wurde auf 100 - 110°C erwärmt.

Bei 103 - 110°C und 0,3 - 0,6 bar Stickstoffüberdruck wurden langsam 4.159,7 g Ethylenoxid zudosiert. Anschließend wurden unter obigen Reaktionsbedingungen 479,3 g Propylenoxid zudosiert. Nach beendeter Propylenoxidzugabe wurde noch weitere 5 h bei 100 - 110°C gerührt.

Das alkalische Polymerisat wurde, wie üblich aufgearbeitet, das erhaltene Produkt hatte folgende physikalische Eigenschaften:

| | |
|---|---|
| Hydroxylzahl (mg KOH/g) | 276 |
| Wassergehalt (%) | 0,03 |
| Viskosität 25°C (mPa.s) | 2.245 |
| Mittlere Funktionalität | 7,5 (berechnet aus Einsatz und Hydroxylzahl) |
| Farbe (APHA) | 400 |

### Beispiel 5

In einem Reaktionsbehälter wie in Beispiel 1 beschrieben, wurden 875,5 g eines Polyethers wie in Beispiel 3 beschrieben, der 6,28 g KOH enthielt sowie 227,1 g Diethylenglykol bei Raumtemperatur vorgelegt. Dazu wurden unter Rühren 888,0 g Saccharose bei Raumtemperatur eingetragen. Das Startergemisch wurde auf 100 - 110°C erwärmt.

Bei 103 - 110°C und 0,3 - 0,6 bar Stickstoffüberdruck wurden langsam 1 323,3 g Ethylenoxid zudosiert. Anschließend wurden unter obigen Reaktionsbedingungen 3 087,8 g Propylenoxid zudosiert. Anschließend wurden unter obigen Reaktionsbedingungen 3 087,8 g Propylenoxid zudosiert. Nach beendeter Propylenoxidzugabe wurde noch weiter 5 h bei 100 - 110°C gerührt.

Das alkalische Polymerisat wurde wie üblich aufgearbeitet, das erhaltene Produkt hatte folgende physikalische Eigenschaften:

| | |
|---|---|
| Hydroxylzahl (mg KOH/g) | ≠ 371 |
| Wassergehalt (%) | 0,02 |
| Viskosität 25°C (mPas) | 5 242 |
| mittlere Funktionalität | 5,54 (berechnet aus Einsatz und Hydroxylzahl) |
| Farbe | Gelb |

## Patentansprüche

1. Verfahren zur Herstellung von hochfunktionellen, niedrigviskosen, hellen Polyethern, dadurch gekennzeichnet, daß zunächst bei Temperaturen von 20 - 110 °C ein Startergemisch hergestellt wird, bestehend aus:
Komponente A) 100 Gewichtsteile Saccharose
Komponente B) 30 - 1.000 Gewichtsteile eines weiteren höherwertigen Alkohols mit einer OH-Zahl von >800 und einem Molekulargwicht von 62 bis 420 und/oder dessen Alkoxilierungsproduktes.
Komponente c) [0,5-3] · 10⁻³ Gewichtsteile eines Alkalihydroxides
und das Gemisch anschließend bei 85 - 130 °C, bei Drücken von 0,3 - 4 bar Stickstoffüberdruck mit Alkylenoxiden zur Reaktion gebracht wird.

2. Verfahren, gemäß Anspruch 1, dadurch gekennzeichnet, daß als Komponente B ein wasserlösliches Polyol und/oder dessen Alkoxilierungsprodukt eingesetzt wird.

3. Verfahren, nach Anspruch 1-2, dadurch gekennzeichnet, daß als Komponente B Mischungen von Polyolen und/oder deren Alkoxilierungsprodukte eingesetzt werden.

4. Verfahren, nach Anspruch 1-3, dadurch gekennzeichnet, daß Kaliumhydroxid als konzentrierte wäßrige Lösung und/oder als Alkoholat des höherwertigen Polyetherpolyols eingesetzt wird.

5. Verfahren, nach Anspruch 1-4, dadurch gekennzeichnet, daß Kaliumhydroxid in einer Konzentration von 500 - 3.000 ppm, bevorzugt 600 - 2.500 ppm verwendet wird.

6. Verfahren, nach Anspruch 1 - 5, dadurch gekennzeichnet, daß als Alkylenoxide 2 - 90 Gew.-% Ethylenoxid und 10 - 98 Gew.-% Propylenoxid und/oder 1,2-Butylenoxid eingesetzt werden.

7. Verfahren, nach Anspruch 1 - 6, dadurch gekennzeichnet, daß als Alkylenoxid Ethylenoxid, Propylenoxid und/oder 1,2-Butylenoxid entweder nacheinander oder als Gemisch in einem Ansatz eingesetzt werden.

8. Verfahren, nach Anspruch 1 - 7, dadurch gekennzeichnet, daß die Alkylenoxide in einer Menge eingesetzt werden, wobei jede OH-Gruppe mit 0,5 - 4,0 Mol Alkylenoxid umgesetzt wird.

## Claims

1. Process for the production of highly functional, low viscosity, light coloured polyethers, characterised in that a starter mixture consisting of:
component A) 100 parts by weight of sucrose
component B) 30-1000 parts by weight of a further relatively highly functional alcohol having an OH value of >800 and a molecular weight of 62 to 420 and/or the alkoxylation product thereof
component c) [0.5-3] · 10⁻³ parts by weight of an alkali metal hydroxide
is initially produced at temperatures of 20-110°C and the mixture is then reacted with alkylene oxides at 85-130°C and nitrogen excess pressures of 0.3-4 bar.

2. Process according to claim 1, characterised in that a water soluble polyol and/or the alkoxylation product thereof is used as component B.

3. Process according to claims 1-2, characterised in that mixtures of polyols and/or the alkoxylation products thereof are used as component B.

4. Process according to claims 1-3, characterised in that potassium hydroxide is used as a concentrated aqueous solution and/or as an alkoxide of the relatively highly functional polyether polyol.

5. Process according to claims 1-4, characterised in that potassium hydroxide is used at a concentration of 500-3000 ppm, preferably 600-2500 ppm.

6. Process according to claims 1-5, characterised in that 2-90 wt.% of ethylene oxide and 10-98 wt.% of propylene oxide and/or 1,2-butylene oxide are used as the alkylene oxides.

7. Process according to claims 1-6, characterised in that the alkylene oxide used is ethylene oxide, propylene oxide and/or 1,2-butylene oxide either in succession or as a mixture in a single batch.

8. Process according to claims 1-7, characterised in that the alkylene oxides are used in a quantity wherein each OH group is reacted with 0.5-4.0 moles of alkylene oxide.

## Revendications

1. Procédé pour la préparation de polyéthers clairs, faiblement visqueux et à fonctionnalité élevée, caractérisé en ce qu'on prépare d'abord, à des températures de 20 à 110°C, un mélange d'amorçage constitué par, à titre de:
composant A) 100 parties en poids de saccharose;
composant B) 30 à 1.000 parties en poids d'un alcool supplémentaire à valence supérieure possédant un indice OH >800 et un poids moléculaire de 62 à 420, et/ou de son produit d'alcoxylation;
composant C) [0,5-3].10⁻³ partie en poids d'un hydroxyde de métal alcalin
et on amène ensuite le mélange à réagir avec des oxydes d'alkylènes à une température de 85 à 130°C sous des pressions correspondant à une surpression d'azote de 0,3 à 4 bar.

2. Procédé selon la revendication 1, caractérisé en ce qu'on met en oeuvre, à titre de composant B, un polyol hydrosoluble et/ou son produit d'alcoxylation.

3. Procédé selon les revendications 1 et 2, caractérisé en ce qu'on met en oeuvre, à titre de composant B, des mélanges de polyols et/ou de leurs produits d'alcoxylation.

4. Procédé selon les revendications 1 à 3, caractérisé en ce qu'on met en oeuvre de l'hydroxyde de potassium sous forme de solution aqueuse concentrée et/ou sous forme d'alcoolate du polyétherpolyol à valence supérieure.

5. Procédé selon les revendications 1 à 4, caractérisé en ce qu'on utilise l'hydroxyde de potassium en une concentration de 500 à 3.000 ppm, de préférence de 600 à 2.500 ppm.

6. Procédé selon les revendications 1 à 5, caractérisé en ce qu'on met en oeuvre, à titre d'oxydes d'alkylènes, de l'oxyde d'éthylène à concurrence de 2 à 90% en poids et de l'oxyde de propylène et/ou de l'oxyde de 1,2-butylène à concurrence de 10 à 98% en poids.

7. Procédé selon les revendications 1 à 6, caractérisé en ce qu'on met en oeuvre, à titre d'oxyde d'alkylène, l'oxyde d'éthylène, l'oxyde de propylène et/ou l'oxyde de 1,2-butylène, soit successivement, soit sous la forme d'un mélange en un seul lot.

8. Procédé selon les revendications 1 à 7, caractérisé en ce qu'on met en oeuvre les oxydes d'alkylènes en une quantité telle que chaque groupe OH réagit avec de 0,5 à 4,0 moles d'oxyde d'alkylène.
